# EUROPÄISCHE PATENTSCHRIFT

(11) **EP 4 409 092 B1**
(45) Veröffentlichungstag und Bekanntmachung des Hinweises auf die Patenterteilung: **29.10.2025**
(21) Anmeldenummer: 22792748.0
(22) Anmeldetag: 27.09.2022
(51) Int. Cl.: E04H 3/28, A47C 1/00

(54) **MULTIMEDIALE ERLEBNISANLAGE**
MULTIMEDIA EXPERIENCE CENTRE
INSTALLATION DE DÉCOUVERTE MULTIMÉDIA

(30) Priorität: 28.09.2021 CN 202111145166
(43) Veröffentlichungstag der Anmeldung: 07.08.2024
(73) Patentinhaber: Kraftwerk Living Technologies GmbH, 4600 Wels (AT)
(72) Erfinder: HOFER, Christian, 4064 Oftering (AT); MEIER, Manfred, 4631 Krenglbach (AT)
(74) Vertreter: Burger, Hannes
(86) Internationale Anmeldenummer: PCT/AT2022/060335
(87) Internationale Veröffentlichungsnummer: WO 2023/049946

(56) Entgegenhaltungen:
- WO-A1-2015/192155
- CN-A- 109 339 505
- DE-A1- 10 200 435
- JP-A- H06 272 407

## Beschreibung

Die Erfindung betrifft eine multimediale Erlebnisanlage gemäß Anspruch 1.

Aus dem Stand der Technik sind diverse multimediale Erlebnisanlagen bekannt. Beispielsweise offenbaren die WO 2015/192155 A1, die DE 102 00 435 A1, die CN 109 339 505 A und die JP H06 272407 A multimediale Erlebnisanlagen mit drehbaren Zuschauerbereichen. Aufgabe der vorliegenden Erfindung war es, eine verbesserte multimediale Erlebnisanlage zu schaffen.

Diese Aufgabe wird durch eine Vorrichtung gemäß den Ansprüchen gelöst.

Erfindungsgemäß ist eine multimediale Erlebnisanlage ausgebildet. Die multimediale Erlebnisanlage umfasst:
- eine erste Vorführeinheit;
- eine zweite Vorführeinheit;
- einen Zuschauerraum mit einer Grundfläche, wobei dem Zuschauerraum die erste Vorführeinheit und die zweite Vorführeinheit zugeordnet sind;
- einen Zuschauerbereich, wobei der Zuschauerbereich innerhalb des Zuschauerraumes angeordnet ist und wobei der Zuschauerbereich einen Unterbau und darauf aufgenommen eine Mehrzahl von Sitzen aufweist und wobei die Anordnung der Sitze eine Haupt-Blickrichtung im Zuschauerbereich festlegt. Im Zuschauerraum ist eine Lagervorrichtung angeordnet, mittels der der Unterbau des Zuschauerbereiches in seiner Ausrichtung in Bezug zur Grundfläche des Zuschauerraums verschwenkbar ist,

so dass in einer ersten Konfiguration, die Haupt-Blickrichtung auf die erste Vorführeinheit ausgerichtet ist
und in einer zweiten Konfiguration, die Haupt-Blickrichtung auf die zweite Vorführeinheit ausgerichtet ist, dadurch gekennzeichnet, dass der Unterbau des Zuschauerbereiches relativ zur Grundfläche des Zuschauerraumes um eine unbeschränkte Anzahl an Umdrehungen frei drehbar ist, wobei zwischen dem Unterbau des Zuschauerbereiches und der Grundfläche des Zuschauerraumes ein Gleitkontakt ausgebildet ist, welcher zur elektrischen Übertragung dient.

Die erfindungsgemäße multimediale Erlebnisanlage bringt den Vorteil mit sich, dass zwei unabhängige Vorführeinheiten vorgesehen sind, wobei die Aufmerksamkeit der Besucher der gegenständlichen multimedialen Erlebnisanlage, auf eine der beiden Vorführeinheiten gerichtet werden kann, ohne dafür den Zuschauerbereich neu konfigurieren zu müssen. Insbesondere ist der Wechsel der Zuordnung während der Anwesenheit der Besucher möglich, bevorzugt ohne dass die Besucher ihre Position bzw. ihren Platz im Zuschauerbereich ändern bzw. verlassen müssen.

Somit können in der aktuell nicht in Haupt-Blickrichtung ausgerichteten Vorführeinheit Vorbereitungsarbeiten stattfinden, ohne die Aktionen in der ausgerichteten Vorführeinheit zu beeinträchtigen. Danach wird die Ausrichtung geändert, so dass sich für den Besucher nur eine sehr kurze Unterbrechungsphase einstellt.

Weiters kann es zweckmäßig sein, wenn mehrere Sitzgruppen ausgebildet sind, wobei die Sitzgruppen jeweils mehrere der Sitze umfassen, wobei die in einer Sitzgruppe zusammengefassten Sitze gemeinsam relativ zum Unterbau verschiebbar und/oder verschwenkbar am Unterbau aufgenommen sind. Dies bringt den Vorteil mit sich, dass durch Verschwenken bzw. Verkippen der einzelnen Sitzgruppen ein verbessertes Entertainment-Erlebnis erreicht werden kann.

Ferner kann vorgesehen sein, dass die Sitze jeweils eine Medienzufuhr aufweisen. Durch diese Maßnahme kann ein verbessertes Entertainment-Erlebnis erreicht werden. In einer ersten Ausführungsvariante kann vorgesehen sein, dass die Medienzufuhr in Form einer Wasserzufuhr ausgebildet ist. In einer alternativen Ausführungsvariante kann vorgesehen sein, dass die Medienzufuhr in Form einer Druckluftzufuhr ausgebildet ist. In einer weiteren alternativen Ausführungsvariante kann vorgesehen sein, dass die Medienzufuhr in Form einer elektrischen Versorgungsleitung oder einer elektrischen Steuerleitung ausgebildet ist.

Erfindungsgemäß ist der Unterbau des Zuschauerbereiches relativ zur Grundfläche des Zuschauerraumes um eine unbeschränkte Anzahl an Umdrehungen frei drehbar. Dies bringt den Vorteil mit sich, dass der Unterbau des Zuschauerbereiches beispielsweise immer im Uhrzeigersinn bzw. immer entgegen dem Uhrzeigersinn gedreht werden kann und nicht zwischen einer Anfangsstellung und einer Endstellung vor- und zurückgedreht werden muss. Dadurch kann der Unterbau des Zuschauerbereichs derart gedreht werden, dass die Hauptblickrichtung nacheinander auf am Umfang angeordnete Vorführeinheiten verdreht wird, wobei zur Erreichung einer möglichst kurzen Verdrehzeit zwischen der letzten Vorführeinheit und der ersten Vorführeinheit, der Unterbau des Zuschauerbereichs einfach in der vorherigen Drehrichtung weitergedreht wird.

Erfindungsgemäß ist auch die Ausprägung, gemäß welcher vorgesehen sein kann, dass zwischen dem Unterbau des Zuschauerbereiches und der Grundfläche des Zuschauerraumes ein Gleitkontakt ausgebildet ist, welcher zur elektrischen Übertragung dient. Dies bringt den Vorteil mit sich, dass durch diese Maßnahme die freie Drehbarkeit des Unterbaus erreicht werden kann und gleichzeitig eine Übertragung von elektrischen Signalen bzw. eine Übertragung von elektrischer Leistung erreicht werden kann.

Gemäß einer Weiterbildung ist es möglich, dass der Gleitkontakt erste Pole zur elektrischen Leistungsübertragung und weitere Pole zur elektrischen Signalübertragung aufweist. Dies bringt den Vorteil mit sich, dass der Zuschauerraum eine umfangreiche Funktionalität aufweisen kann.

In einer alternativen Ausführungsvariante kann vorgesehen sein, dass die Signalübertragung, beispielsweise für Steuersignale, über berührungslose Signalübertragungsmittel, wie etwa Funk oder WLAN, erfolgen kann. Natürlich ist es auch denkbar, dass eine optische Signalübertragung erfolgt.

Ferner kann es zweckmäßig sein, wenn im Unterbau des Zuschauerbereiches ein Wasserspeicher angeordnet ist, wobei den Sitzen zugeordnete Effektdüsen mit dem Wasserspeicher gekoppelt sind. Dies bringt den Vorteil mit sich, dass das für die Effektdüsen benötigte Wasser im Unterbau des Zuschauerbereichs vorgehalten werden kann und somit keine ständige Wasserzufuhr von außerhalb in den Unterbau notwendig ist. In einer alternativen Ausführungsvariante kann auch vorgesehen sein, dass eine Drehdurchführung ausgebildet ist, mittels welcher eine Wasserleitung in den Unterbau geführt ist, um bei freier Drehbarkeit des Unterbaus eine ununterbrochene Wasserzufuhr von extern zum Unterbau zu ermöglichen.

Darüber hinaus kann vorgesehen sein, dass im Unterbau des Zuschauerbereiches ein Verdichter angeordnet ist, wobei den Sitzen zugeordnete Effektdüsen mit dem Verdichter gekoppelt sind. Dies bringt den Vorteil mit sich, dass die für die Effektdüsen benötigte Druckluft im Unterbau des Zuschauerbereichs vorgehalten werden kann und somit keine ständige Druckluftzufuhr von außerhalb in den Unterbau notwendig ist. In einer alternativen Ausführungsvariante kann auch vorgesehen sein, dass eine Drehdurchführung ausgebildet ist, mittels welcher eine Druckluftleitung in den Unterbau geführt ist, um bei freier Drehbarkeit des Unterbaus eine ununterbrochene Druckluftzufuhr von extern in den Unterbau zu ermöglichen.

Weiters kann vorgesehen sein, dass eine dritte Vorführeinheit ausgebildet ist, wobei die erste Vorführeinheit und die dritte Vorführeinheit bezogen auf die Grundfläche des Zuschauerraums in einem ersten Kreissegment des Zuschauerraumes angeordnet sind und die zweite Vorführeinheit in einem zweiten Kreissegment des Zuschauerraumes angeordnet sind, wobei das erste Kreissegment einen ersten Kreissegmentwinkel zwischen 140° und 180° aufspannt. Dies bringt ein verbessertes Entertainment-Erlebnis mit sich. Insbesondere kann durch diese Maßnahme in der ersten Vorführeinheit im Vorführablauf eine erste Show bzw. pre-show aufgeführt werden. In der platzmäßig größeren zweiten Vorführeinheit kann eine zweite Show bzw. Hauptshow aufgeführt werden. Insbesondere kann vorgesehen sein, dass es sich hierbei bei der zweiten Show um eine Multimediavorführung mit Anzeige von Bewegtbildern handelt. In der dritten Vorführeinheit kann eine dritte Show bzw. post-show aufgeführt werden. Insbesondere kann vorgesehen sein, dass die erste Show und die dritte Show in Bezug auf deren Vorführzeit kürzer dauern als die zweite Show. Weiters kann vorgesehen sein, dass in der ersten Vorführeinheit und/oder in der dritten Vorführeinheit eine begehbare Bühnenfläche ausgebildet ist.

Gemäß einer besonderen Ausprägung ist es möglich, dass die zweite Vorführeinheit eine Anzeigefläche umfasst, welche kuppelförmig ausgebildet ist, wobei die Anzeigefläche in einem Querschnitt gesehen einen Öffnungswinkel zwischen 180° und 220° aufweist.

Entsprechend einer vorteilhaften Weiterbildung kann vorgesehen sein, dass die Anzeigefläche eine Vielzahl von Leuchtdioden umfasst. Besonders eine derart ausgebildete Anzeigefläche eignet sich überraschend gut zum Verbessern des Entertainmenterlebnisses.

Insbesondere kann es vorteilhaft sein, wenn die Leuchtdioden auf einer Trägerstruktur angeordnet sind, wobei die Trägerstruktur perforiert ist und die Leuchtdioden in einem Leuchtdiodenabstand zueinander angeordnet sind, so dass von einer Oberfläche der Anzeigefläche zu einer Rückseite der Trägerstruktur mehrere durchgängige Ausnehmungen ausgebildet sind. Dies bringt den Vorteil mit sich, dass eine große Fläche als Anzeigefläche ausgebildet sein kann und trotzdem erreicht werden kann, dass die Zuschauer mit ausreichend hoher Tonqualität beschallt werden können, um das Entertainment-Erlebnis zu verbessern.

Ferner kann vorgesehen sein, dass die Anzeigefläche als Projektionsfläche ausgebildet ist und dass im Zuschauerraum mehrere Projektoren angeordnet sind, wobei zumindest einer der Projektoren hinter der Anzeigefläche angeordnet ist, wobei in der Anzeigefläche eine Öffnung ausgebildet ist, durch welche hindurch der Projektor auf einen gegenüberliegenden Bereich der Anzeigefläche projiziert. Dies bringt den Vorteil mit sich, dass bei Ausführung der Anzeigefläche als Projektionsfläche die komplette Projektionsfläche zur Videoprojektion genutzt werden kann.

Darüber hinaus kann vorgesehen sein, dass die Anzeigefläche als Projektionsfläche ausgebildet ist und dass im Zuschauerraum mehrere Projektoren angeordnet sind, wobei bei einer bestimmten Winkelstellung des Unterbaus des Zuschauerbereiches das Bild von zumindest einem der Projektoren teilweise geschwärzt wird. Durch diese Maßnahme kann erreicht werden, dass bei einem Verschwenken des Zuschauerbereichs zwischen den unterschiedlichen Konfigurationen eine für eine erste Konfiguration notwendige Projektion in der zweiten Konfiguration teilweise ausgeblendet wird, um so das Blenden der Zuschauer bestmöglich zu unterbinden.

Vorteilhaft ist auch eine Ausprägung, gemäß welcher vorgesehen sein kann, dass in Haupt-Blickrichtung vorne am Zuschauerbereich eine Fluchtstiege ausgebildet ist, welche in den Unterbau des Zuschauerbereiches führt, wobei im Unterbau des Zuschauerbereiches ein umlaufender Fluchtweg ausgebildet ist. Durch diese Maßnahme kann die Personensicherheit in der multimedialen Erlebnisanlage erhöht werden.

Gemäß einer Weiterbildung ist es möglich, dass zumindest eine erste Fluchtstiege und eine zweite Fluchtstiege ausgebildet sind, wobei im Bereich der ersten Fluchtstiege eine absenkbare Rollstuhltransportplattform ausgebildet ist. Dies bringt den Vorteil mit sich, dass auch für in deren Mobilität eingeschränkte Personen ein sicherer Zugang bzw. ein sicheres Verlassen der multimedialen Erlebnisanlage erreicht werden kann.

Ferner kann es zweckmäßig sein, wenn im Unterbau des Zuschauerbereiches vom umlaufenden Fluchtweg umgeben ein Technikraum angeordnet ist. Dies bringt den Vorteil mit sich, dass durch diese Maßnahme ein Technikraum installiert werden kann und gleichzeitig eine ausreichend gute Fluchtwegsituation erhalten bleiben kann.

Insbesondere kann vorgesehen sein, dass der Technikraum zur Aufnahme des Wasserspeichers dient. Weiters kann vorgesehen sein, dass der Verdichter im Technikraum angeordnet ist.

Darüber hinaus kann vorgesehen sein, dass zwischen einzelnen Sitzreihen oder am Rande des Zuschauerbereiches ein Geländer angeordnet ist, wobei das Geländer transparent oder transluzent ist. Dies bringt den Vorteil mit sich, dass eine ausreichend hohe Personensicherheit erreicht werden kann und die Absturzsicherung gleichzeitig das multimediale Entertainment-Erlebnis nicht negativ beeinträchtigt.

Weiters kann vorgesehen sein, dass das Geländer als zusätzliche Anzeigefläche dient. Dies bringt den Vorteil mit sich, dass das multimediale Entertainment-Erlebnis weiter verbessert werden kann. Insbesondere kann durch eine Bilddarstellung an einem der Hauptanzeigefläche vorgelagerten Geländer ein 3D-Effekt erreicht werden.

Gemäß einer besonderen Ausprägung ist es möglich, dass im Zuschauerraum gleichmäßig verteilt in einem Abstand zueinander mehrere Lautsprecher angeordnet sind und dass ein Digitalrechner ausgebildet ist, wobei mittels des Digitalrechners in Abhängigkeit der Schwenkwinkelstellung des Zuschauerbereiches die Audioausgabe auf die Lautsprecher berechenbar ist. Dies bringt den Vorteil mit sich, dass für sämtliche Konfigurationen mit unterschiedlichen Ausrichtungen der Hauptblickrichtung dieselben Lautsprecher verwendet werden können, wodurch der Installationsaufwand möglichst geringgehalten werden kann. Darüber hinaus kann durch diese Maßnahme in allen unterschiedlichen Konfigurationen eine hohe Audioqualität erreicht werden.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung eines ersten Ausführungsbeispiels einer multimedialen Erlebnisanlage;
- Fig. 2: die multimediale Erlebnisanlage des ersten Ausführungsbeispiels in einem Aufriss;
- Fig. 3: die multimediale Erlebnisanlage des ersten Ausführungsbeispiels in einem Grundriss;
- Fig. 4: die multimediale Erlebnisanlage des ersten Ausführungsbeispiels in einer Schnittdarstellung gemäß der Schnittlinie IV-IV aus Fig. 2;
- Fig. 5: die multimediale Erlebnisanlage des ersten Ausführungsbeispiels in einer Halbschnittdarstellung;
- Fig. 6: ein Ausführungsbeispiel der Anzeigefläche mit Leuchtdioden;
- Fig. 7: die multimediale Erlebnisanlage eines weiteren Ausführungsbeispiels in einer Halbschnittdarstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

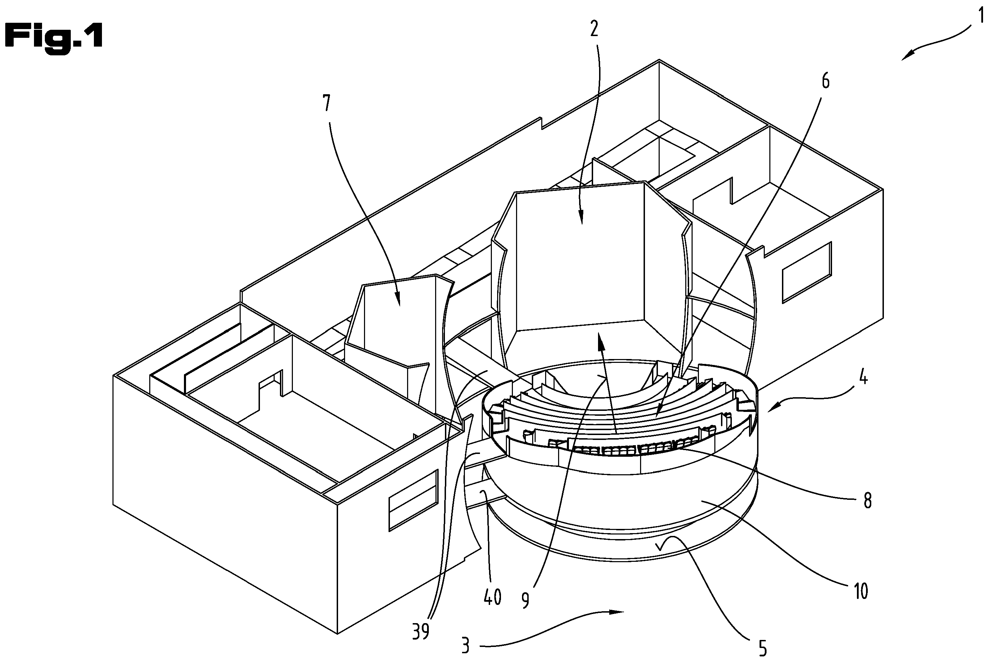

Fig. 1 zeigt eine perspektivische Darstellung eines ersten Ausführungsbeispiels einer multimedialen Erlebnisanlage 1.

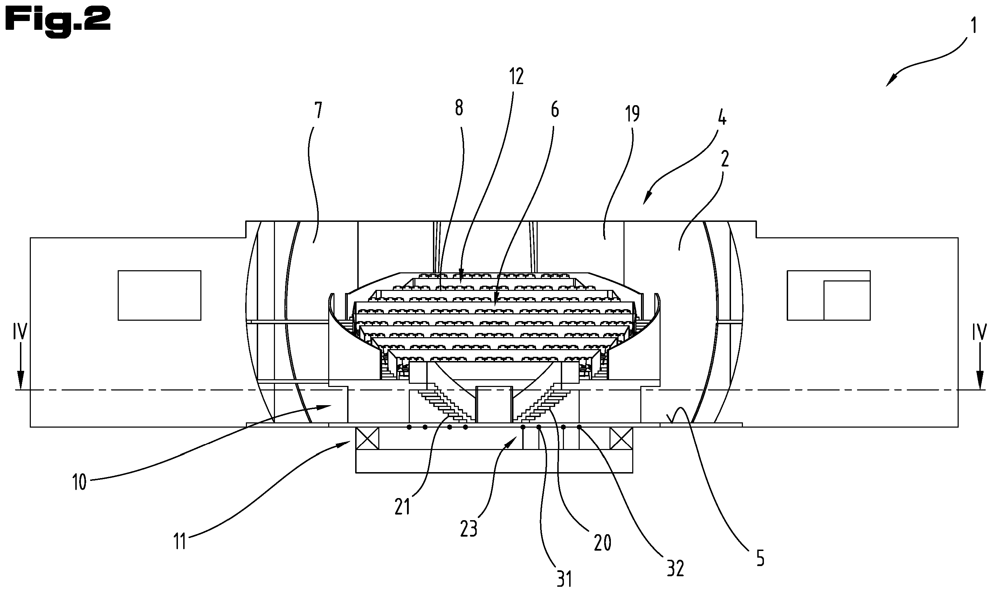

Fig. 2 zeigt die multimediale Erlebnisanlage 1 des ersten Ausführungsbeispiels in einem Aufriss.

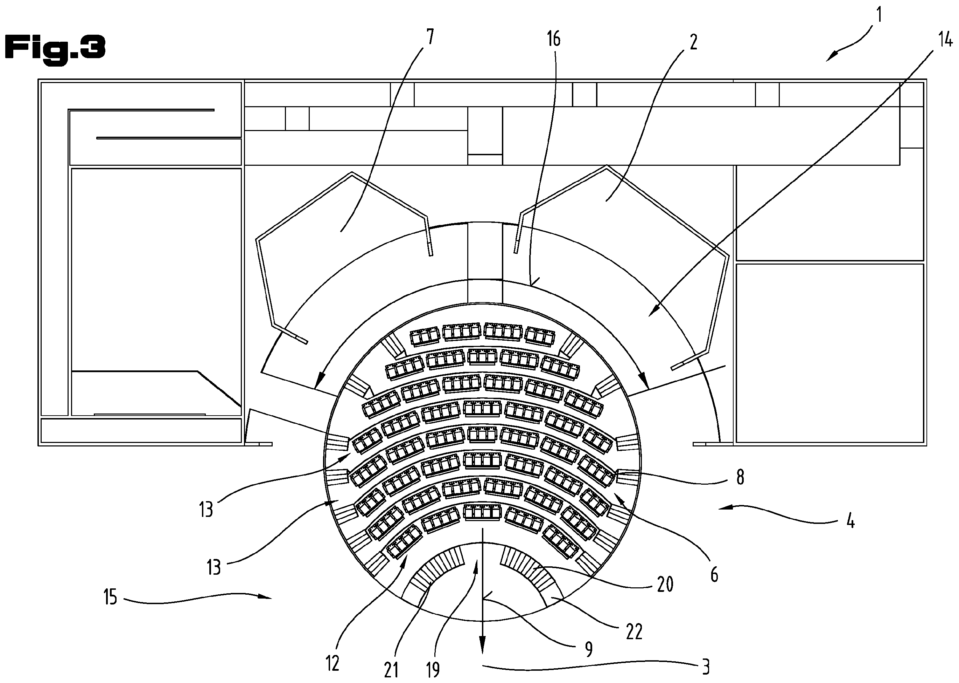

Fig. 3 zeigt die multimediale Erlebnisanlage 1 des ersten Ausführungsbeispiels in einem Grundriss.

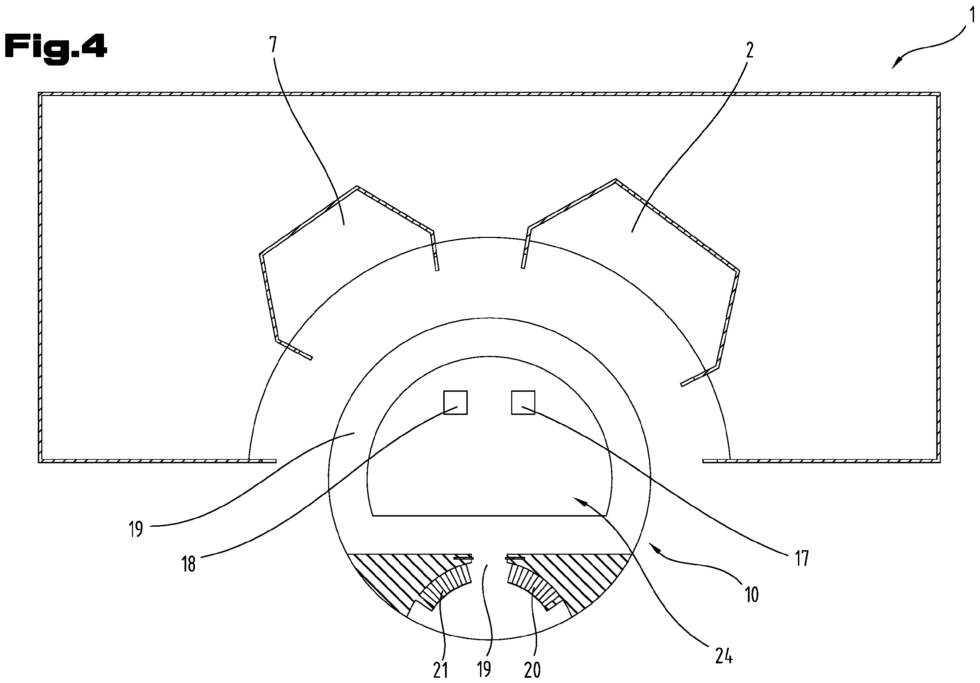

Fig. 4 zeigt die multimediale Erlebnisanlage 1 des ersten Ausführungsbeispiels in einer Schnittdarstellung gemäß der Schnittlinie IV-IV aus Fig. 2.

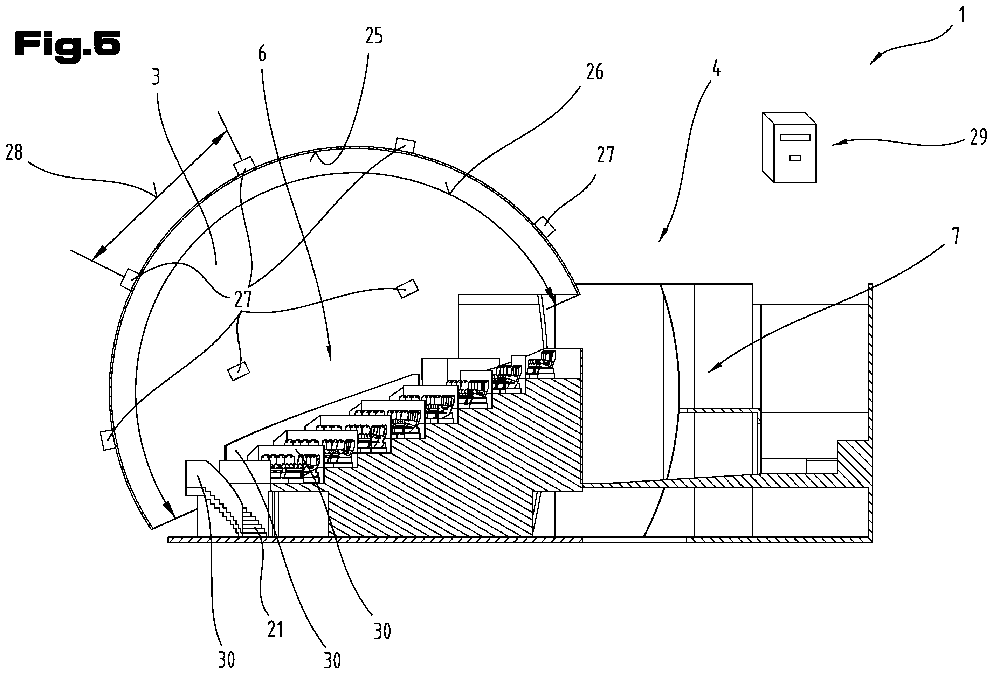

Fig. 5 zeigt die multimediale Erlebnisanlage 1 des ersten Ausführungsbeispiels in einer Halbschnittdarstellung.

Die Beschreibung erfolgt anhand einer Zusammenschau der Figuren 1 bis 5, wobei für gleiche Teile gleiche Bezugszeichen bzw. Bauteilbezeichnungen wie in den jeweils vorangegangenen Figuren verwendet werden.

Die multimediale Erlebnisanlage 1 umfasst eine erste Vorführeinheit 2 und eine davon getrennte zweite Vorführeinheit 3. Weiters kann eine dritte Vorführeinheit 7 vorgesehen sein.

Weiters umfasst die multimediale Erlebnisanlage 1 einen Zuschauerraum 4 mit einer Grundfläche 5, wobei dem Zuschauerraum 4 die erste Vorführeinheit 2, die zweite Vorführeinheit 3 und die dritte Vorführeinheit 7 zugeordnet bzw. zugewandt sind.

Im Bereich der Grundfläche 5 des Zuschauerraums 4 ist ferner ein Zuschauerbereich 6 vorgesehen. Der Zuschauerbereich 6 ist auf einem Unterbau 10 angeordnet.

Im Zuschauerbereich 6 ist eine Mehrzahl von Sitzen 8 angeordnet. Die Anordnung der Sitze 8 ist dabei derart gewählt, dass der Blick von Besuchern, welche in den Sitzen 8 platzgenommen haben, derart gelenkt bzw. ausgerichtet werden, dass die Blickrichtungen aller Personen eine Haupt-Blickrichtung 9 definieren.

Diese Haupt-Blickrichtung 9 lenkt die Aufmerksamkeit des Auditoriums auf die der jeweiligen Konfiguration zugeordnete Vorführeinheit 2, 3, 7.

In Fig. 1 ist die Mehrzweck-Veranstaltungsanlage 1 in einer ersten Konfiguration dargestellt, bei der der Zuschauerbereich 6, insbesondere die Haupt-Blickrichtung 9, in Richtung der ersten Vorführeinheit 2 ausgerichtet ist. Wie aus Fig. 1 weiters ersichtlich, kann vorgesehen sein, dass in der ersten Konfiguration der Zuschauerbereich 6 über einen Eingang 39 oder mehrere Eingänge 39 zugänglich ist.

In den Fig. 2 bis 5 ist die Mehrzweck-Veranstaltungsanlage 1 in einer zweiten Konfiguration dargestellt, bei der der Zuschauerbereich 6, insbesondere die Haupt-Blickrichtung 9, in Richtung der zweiten Vorführeinheit 3 ausgerichtet ist.

Zur Änderung der Konfiguration ist vorgesehen, dass die multimediale Erlebnisanlage 1 eine Lagervorrichtung 11 aufweist, welche den Zuschauerbereich 6, insbesondere den Unterbau 10, gegenüber dem Zuschauerraum 4 in seiner Ausrichtung veränderbar aufnimmt. Gemäß einer bevorzugten Ausbildung ist der Zuschauerbereich 6 als Drehtribüne ausgebildet. Somit kann der Zuschauerbereich 6 mittels der Lagervorrichtung 11 um einen Mittelpunkt des Zuschauerbereichs 6 gegenüber dem feststehenden Zuschauerraum 4 verdreht werden. Insbesondere ist eine Verdrehung derart möglich, dass die Haupt-Blickrichtung 9 in der ersten Konfiguration auf die erste Vorführeinheit 2, in der zweiten Konfiguration auf die zweite Vorführeinheit 3 und in der dritten Konfiguration auf die dritte Vorführeinheit 7 gerichtet ist.

Insbesondere kann vorgesehen sein, dass in der Draufsicht auf die multimediale Erlebnisanlage 1 gesehen die erste Vorführeinheit 2, die zweite Vorführeinheit 3 und die dritte Vorführeinheit 7 in dieser Reihenfolge im Uhrzeigersinn angeordnet sind. Der Zuschauerbereich 6 kann bezüglich der Haupt-Blickrichtung 9 im Uhrzeigersinn gedreht werden, um den Besuchern verschiedene Darbietungen in der ersten Vorführeinheit 2 in der dritten Vorführeinheit 7 und in der zweiten Vorführeinheit 3 vorführen zu können.

Wie aus den Fig. 1 bis 4 weiters ersichtlich, kann vorgesehen sein, dass einzelne der Sitze 8 jeweils zu einer Sitzgruppe 12 zusammengefasst sind. Insbesondere kann die Sitzgruppe 12 einen Sitzgruppenrahmen umfassen, an welchem die einzelnen Sitze 8 angeordnet sind.

Weiters kann vorgesehen sein, dass die einzelnen Sitze 8 in mehreren Sitzreihen 13 angeordnet sind. Die einzelnen Sitzreihen 13 können auf unterschiedlichen Niveaus angeordnet sein, wobei in Hauptblickrichtung 9 hintere Sitzreihen 13 auf einem höheren Niveau angeordnet sein können als in Hauptblickrichtung 9 vordere Sitzreihen 13.

Wie besonders gut aus Fig. 3 ersichtlich, kann vorgesehen sein, dass bezüglich des Grundrisses ein erstes Kreissegment 14 ausgebildet ist und ein zweites Kreissegment 15 ausgebildet ist. Im ersten Kreissegment 14 können die erste Vorführeinheit 2 und die dritte Vorführeinheit 7 angeordnet sein. Im zweiten Kreissegment 15 kann die zweite Vorführeinheit 3 angeordnet sein. Der Übersichtlichkeit halber ist die zweite Vorführeinheit 3 in den Fig. 1 bis 4 nicht näher dargestellt, sondern erst in Fig. 5 dargestellt.

Wie aus Fig. 3 weiters ersichtlich, kann vorgesehen sein, dass das erste Kreissegment 14 einen ersten Kreissegmentwinkel 16 umspannt.

Wie besonders gut an den Fig. 2, 3 und 4 ersichtlich, kann vorgesehen sein, dass in einem unteren Niveau ein Fluchtweg 19 ausgebildet ist. Der Fluchtweg 19 kann umlaufend ausgebildet sein.

Der Fluchtweg 19 kann vom Zuschauerbereich 6 mittels einer ersten Fluchtstiege 20 und einer zweiten Fluchtstiege 21 erreichbar sein. Weiters kann vorgesehen sein, dass im Bereich der ersten Fluchtstiege 20 eine Rollstuhltransportplattform 22 ausgebildet ist, welche zum Transport von Personen mit eingeschränkter Mobilität dienen kann.

Wie aus Fig. 4 ersichtlich, kann vorgesehen sein, dass zentral angeordnet im Unterbau 10 des Zuschauerbereiches 6 ein Technikraum 24 angeordnet ist. Der Fluchtweg 19 kann um den Technikraum 24 herum umlaufend ausgebildet sein.

Weiters kann vorgesehen sein, dass der Fluchtweg 19 mit einem Ausgang 40, welcher in Fig. 1 dargestellt ist, verbunden ist.

Insbesondere kann vorgesehen sein, dass ein Erreichen des Ausganges 40 dann einfach möglich ist, wenn die Haupt-Blickrichtung 9 in der dritten Konfiguration auf die dritte Vorführeinheit 7 gelenkt ist.

Weiters kann vorgesehen sein, dass im Technikraum 24 ein Verdichter 18 zum Bereitstellen von Druckluft angeordnet ist.

Weiters kann vorgesehen sein, dass im Technikraum 24 ein Wasserspeicher 17 zum Bereitstellen von Wasser angeordnet ist. Der Wasserspeicher 17 kann derart bemessen sein, dass ein Wasservorrat für einen Tag gegeben ist.

Wie aus Fig. 5 ersichtlich, kann vorgesehen sein, dass die zweite Vorführeinheit 3 eine Anzeigefläche 25 aufweist, welche zum Anzeigen eines bewegten Bildes dient. Die Anzeigefläche 25 kann in Form eines Kugelsegmentes bzw. einer Kugelkuppe ausgebildet sein. Insbesondere kann vorgesehen sein, dass die Anzeigefläche 25 in einem Querschnitt durch den Mittelpunkt der Kugelkuppe einen Öffnungswinkel 26 aufweist. Der Öffnungswinkel 26 kann größer als 180° sein, sodass die Kugelkuppel größer als in Form einer Halbkugel ausgebildet ist.

Weiters kann vorgesehen sein, dass über den kompletten Zuschauerraum 4 verteilt Lautsprecher 27 angeordnet sind, welche zur Beschallung des Zuschauerbereiches 6 dienen. Die Lautsprecher 27 können in einem Abstand 28 zueinander angeordnet sein und eine regelmäßige Aufteilung aufweisen. Mittels eines Digitalrechners 29 können die Lautsprecher 27 derart angesteuert werden, dass in jeder Konfiguration bzw. Ausrichtung des Zuschauerbereiches 6 ein bestmögliches Klangerlebnis vermittelt werden kann, welches auf die aktuelle Haupt-Blickrichtung 9 abgestimmt ist.

Weiters kann vorgesehen sein, dass eines der Geländer 30, welche zwischen den einzelnen Sitzreihen 13 oder am Rande des Zuschauerbereiches 6 angeordnet ist, als zusätzliche Anzeigefläche dient. Insbesondere kann hierbei vorgesehen sein, dass das oder die vorderen Geländer 30, welche im Bereich der Fluchtstiegen 20, 21 angeordnet sind, als zusätzliche Anzeigefläche dienen, um ein verbessertes Entertainment-Erlebnis bieten zu können.

Wie aus Fig. 2 weiters ersichtlich, kann vorgesehen sein, dass ein Gleitkontakt 23 ausgebildet ist, welcher erste Pole 31 zur elektrischen Leistungsübertragung vom Zuschauerraum 4 in den Unterbau 10 des Zuschauerbereichs 6 dient. Insbesondere kann hierbei vorgesehen sein, dass durch den Gleitkontakt 23 eine drehbare elektrische Verbindung bzw. eine Stromversorgung des Unterbaus 10 erreicht wird.

Weiters kann vorgesehen sein, dass der Gleitkontakt 23 weitere Pole 32 zur elektrischen Signalübertragung aufweist.

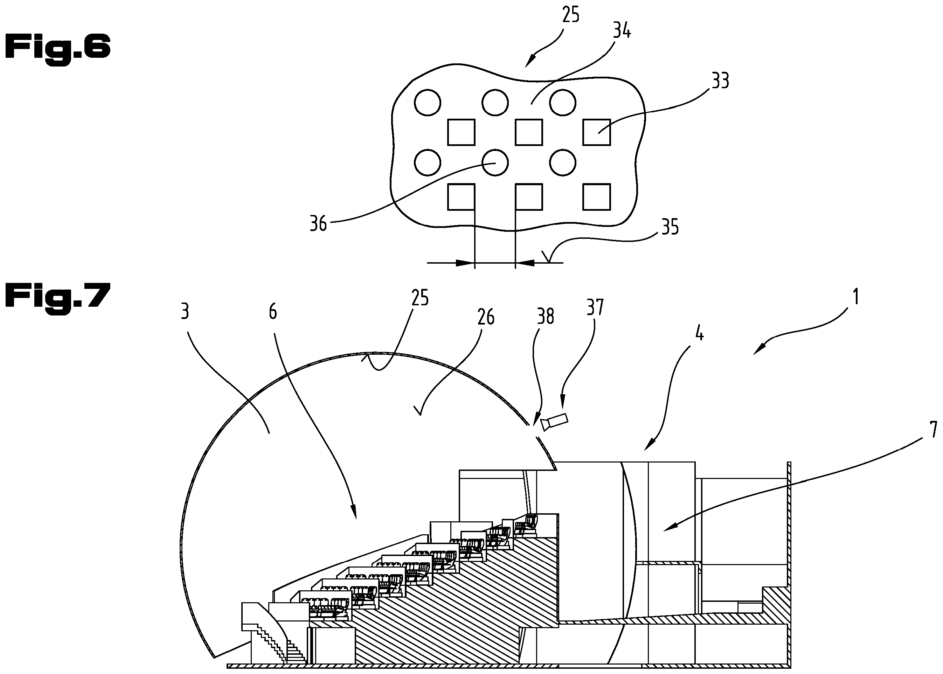

In der Fig. 6 ist eine weitere und gegebenenfalls für sich eigenständige Ausführungsform der Anzeigefläche 25 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Fig. 6 zeigt ein Ansichtsdetail eines Ausführungsbeispiels der Anzeigefläche 25.

Wie aus Fig. 6 ersichtlich, kann vorgesehen sein, dass mehrere Leuchtdioden 33 ausgebildet sind, welche auf einer Trägerstruktur 34 aufgenommen sind. Die Leuchtdioden 33 können in einem Leuchtdiodenabstand 35 zueinander angeordnet sein. Weiters kann vorgesehen sein, dass zwischen den einzelnen Leuchtdioden 33 in der Trägerstruktur 34 Ausnehmungen 36 ausgebildet sind, welche die Trägerstruktur 34 durchdringen. Durch diese Maßnahme kann die Anzeigefläche 25 schalldurchlässig sein, sodass hinter der Anzeigefläche 25 angeordnete Lautsprecher 27 den Zuschauerbereich 6 beschallen können.

In der Fig. 7 ist eine weitere und gegebenenfalls für sich eigenständige Ausführungsform der multimedialen Erlebnisanlage 1 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich, kann vorgesehen sein, dass die Anzeigefläche 25 als Projektionsfläche ausgebildet ist und dass im Zuschauerraum 4 mehrere Projektoren 37 angeordnet sind, welche zur Bilddarstellung auf der Anzeigefläche 25 dienen. Insbesondere kann vorgesehen sein, dass einer der Projektoren 37 hinter der Anzeigefläche 25 angeordnet ist und dass in der Anzeigefläche 25 eine Öffnung 38 ausgebildet ist, durch welches hindurch der Projektor auf einen gegenüberliegenden Bereich der Anzeigefläche projiziert. Die eine Öffnung 38 kann verschließbar sein. Insbesondere kann vorgesehen sein, dass die Öffnung 38 mittels eines Aktors automatisiert verschließbar ist. Hierbei kann eine Blende bzw. Platte oder Deckel vor bzw. hinter die Öffnung 38 verschoben werden.

Weiters ist es auch denkbar, dass in der Öffnung 38 ein Material ausgebildet ist, welches von einer Seite lichtdurchlässig ist, sodass das vom Projektor 37 abgestrahlte Licht die Öffnung 38 passieren kann und welches, wenn es von der zweiten Seite bestrahlt wird, als Projektionsfläche dienen kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Multimediale Erlebnisanlage | 30 | Geländer |
| | | 31 | erste Pole |
| 2 | erste Vorführeinheit | 32 | weitere Pole |
| 3 | zweite Vorführeinheit | 33 | Leuchtdiode |
| 4 | Zuschauerraum | 34 | Trägerstruktur |
| 5 | Grundfläche | 35 | Leuchtdiodenabstand |
| 6 | Zuschauerbereich | 36 | Ausnehmung |
| 7 | dritte Vorführeinheit | 37 | Projektor |
| 8 | Sitz | 38 | Öffnung |
| 9 | Haupt-Blickrichtung | 39 | Eingang |
| 10 | Unterbau | 40 | Ausgang |
| 11 | Lagervorrichtung | | |
| 12 | Sitzgruppe | | |
| 13 | Sitzreihe | | |
| 14 | erstes Kreissegment | | |
| 15 | zweites Kreissegment | | |
| 16 | erster Kreissegmentwinkel | | |
| 17 | Wasserspeicher | | |
| 18 | Verdichter | | |
| 19 | Fluchtweg | | |
| 20 | erste Fluchtstiege | | |
| 21 | zweite Fluchtstiege | | |
| 22 | Rollstuhltransportplattform | | |
| 23 | Gleitkontakt | | |
| 24 | Technikraum | | |
| 25 | Anzeigefläche | | |
| 26 | Öffnungswinkel | | |
| 27 | Lautsprecher | | |
| 28 | Abstand | | |
| 29 | Digitalrechner | | |

## Patentansprüche

1. Multimediale Erlebnisanlage (1) umfassend:
- eine erste Vorführeinheit (2);
- eine zweite Vorführeinheit (3);
- einen Zuschauerraum (4) mit einer Grundfläche (5), wobei dem Zuschauerraum (4) die erste Vorführeinheit (2) und die zweite Vorführeinheit (3) zugeordnet sind;
- einen Zuschauerbereich (6), wobei der Zuschauerbereich (6) innerhalb des Zuschauerraumes (4) angeordnet ist und wobei der Zuschauerbereich (6) einen Unterbau (10) und darauf aufgenommen eine Mehrzahl von Sitzen (8) aufweist und wobei die Anordnung der Sitze (8) eine Haupt-Blickrichtung (9) im Zuschauerbereich (6) festlegt,
wobei
im Zuschauerraum (4) eine Lagervorrichtung (11) angeordnet ist, mittels der der Unterbau (10) des Zuschauerbereiches (6) in seiner Ausrichtung in Bezug zur Grundfläche (5) des Zuschauerraums (4) verschwenkbar ist,
so dass in einer ersten Konfiguration, die Haupt-Blickrichtung (9) auf die erste Vorführeinheit (2) ausgerichtet ist
und in einer zweiten Konfiguration, die Haupt-Blickrichtung (9) auf die zweite Vorführeinheit (3) ausgerichtet ist,
**dadurch gekennzeichnet, dass** der Unterbau (10) des Zuschauerbereiches (6) relativ zur Grundfläche (5) des Zuschauerraumes (4) um eine unbeschränkte Anzahl an Umdrehungen frei drehbar ist, wobei zwischen dem Unterbau (10) des Zuschauerbereiches (6) und der Grundfläche (5) des Zuschauerraumes (4) ein Gleitkontakt (23) ausgebildet ist, welcher zur elektrischen Übertragung dient.

2. Multimediale Erlebnisanlage (1) nach Anspruch 1, **dadurch gekennzeichnet, dass** mehrere Sitzgruppen (12) ausgebildet sind, wobei die Sitzgruppen (12) jeweils mehrere der Sitze (8) umfassen, wobei die in einer Sitzgruppe (12) zusammengefassten Sitze (8) gemeinsam relativ zum Unterbau (10) verschiebbar und/oder verschwenkbar am Unterbau (10) aufgenommen sind.

3. Multimediale Erlebnisanlage (1) nach Anspruch 1 oder 2, **dadurch gekennzeichnet, dass** die Sitze (8) jeweils eine Medienzufuhr aufweisen.

4. Multimediale Erlebnisanlage (1) nach Anspruch 1, **dadurch gekennzeichnet, dass** der Gleitkontakt (23) erste Pole (31) zur elektrischen Leistungsübertragung und weitere Pole (32) zur elektrischen Signalübertragung aufweist.

5. Multimediale Erlebnisanlage (1) nach Anspruch 1, **dadurch gekennzeichnet, dass** im Unterbau (10) des Zuschauerbereiches (6) ein Wasserspeicher (17) angeordnet ist, wobei den Sitzen (8) zugeordnete Effektdüsen mit dem Wasserspeicher (17) gekoppelt sind.

6. Multimediale Erlebnisanlage (1) nach Anspruch 1, **dadurch gekennzeichnet, dass** im Unterbau (10) des Zuschauerbereiches (6) ein Verdichter (18) angeordnet ist, wobei den Sitzen (8) zugeordnete Effektdüsen mit dem Verdichter (18) gekoppelt sind.

7. Multimediale Erlebnisanlage (1) nach Anspruch 1, **dadurch gekennzeichnet, dass** eine dritte Vorführeinheit (7) ausgebildet ist, wobei die erste Vorführeinheit (2) und die dritte Vorführeinheit (7) bezogen auf die Grundfläche (5) des Zuschauerraums (4) in einem ersten Kreissegment (14) des Zuschauerraumes (4) angeordnet sind und die zweite Vorführeinheit (3) in einem zweiten Kreissegment (15) des Zuschauerraumes (4) angeordnet sind, wobei das erste Kreissegment (14) einen ersten Kreissegmentwinkel (16) zwischen 140° und 180° aufspannt.

8. Multimediale Erlebnisanlage (1) nach Anspruch 1, **dadurch gekennzeichnet, dass** die zweite Vorführeinheit (3) eine Anzeigefläche (25) umfasst, welche kuppelförmig ausgebildet ist, wobei die Anzeigefläche (25) in einem Querschnitt gesehen einen Öffnungswinkel (26) zwischen 180° und 220° aufweist.

9. Multimediale Erlebnisanlage (1) nach Anspruch 8, **dadurch gekennzeichnet, dass** die Anzeigefläche (25) eine Vielzahl von Leuchtdioden (33) umfasst.

10. Multimediale Erlebnisanlage (1) nach Anspruch 9, **dadurch gekennzeichnet, dass** die Leuchtdioden (33) auf einer Trägerstruktur (34) angeordnet sind, wobei die Trägerstruktur (34) perforiert ist und die Leuchtdioden (33) in einem Leuchtdiodenabstand (35) zueinander angeordnet sind, so dass von einer Oberfläche der Anzeigefläche (25) zu einer Rückseite der Trägerstruktur (34) mehrere durchgängige Ausnehmungen (36) ausgebildet sind.

11. Multimediale Erlebnisanlage (1) nach Anspruch 8, **dadurch gekennzeichnet, dass** die Anzeigefläche (25) als Projektionsfläche ausgebildet ist und dass im Zuschauerraum (4) mehrere Projektoren (37) angeordnet sind, wobei zumindest einer der Projektoren (37) hinter der Anzeigefläche (25) angeordnet ist, wobei in der Anzeigefläche (25) eine Öffnung (38) ausgebildet ist, durch welche hindurch der Projektor (37) auf einen gegenüberliegenden Bereich der Anzeigefläche (25) projiziert.

12. Multimediale Erlebnisanlage (1) nach Anspruch 8, **dadurch gekennzeichnet, dass** die Anzeigefläche (25) als Projektionsfläche ausgebildet ist und dass im Zuschauerraum (4) mehrere Projektoren (37) angeordnet sind, wobei bei einer bestimmten Winkelstellung des Unterbau (10) des Zuschauerbereiches (6) das Bild von zumindest einem der Projektoren (37) teilweise geschwärzt wird.

13. Multimediale Erlebnisanlage (1) nach Anspruch 1, **dadurch gekennzeichnet, dass** in Haupt-Blickrichtung (9) vorne am Zuschauerbereich (6) eine Fluchtstiege (20, 21) ausgebildet ist, welche in den Unterbau (10) des Zuschauerbereiches (6) führt, wobei im Unterbau (10) des Zuschauerbereiches (6) ein umlaufender Fluchtweg (19) ausgebildet ist.

14. Multimediale Erlebnisanlage (1) nach Anspruch 13, **dadurch gekennzeichnet, dass** zumindest eine erste Fluchtstiege (20) und eine zweite Fluchtstiege (21) ausgebildet sind, wobei im Bereich der ersten Fluchtstiege (20) eine absenkbare Rollstuhltransportplattform (22) ausgebildet ist.

15. Multimediale Erlebnisanlage (1) nach Anspruch 13 oder 14, **dadurch gekennzeichnet, dass** im Unterbau (10) des Zuschauerbereiches (6) vom umlaufenden Fluchtweg (19) umgeben ein Technikraum (24) angeordnet ist.

16. Multimediale Erlebnisanlage (1) nach Anspruch 1, **dadurch gekennzeichnet, dass** zwischen einzelnen Sitzreihen (13) oder am Rande des Zuschauerbereiches (6) ein Geländer (30) angeordnet ist, wobei das Geländer (30) transparent oder transluzent ist.

17. Multimediale Erlebnisanlage (1) nach Anspruch 16, **dadurch gekennzeichnet, dass** das Geländer (30) als zusätzliche Anzeigefläche dient.

18. Multimediale Erlebnisanlage (1) nach Anspruch 1, **dadurch gekennzeichnet, dass** im Zuschauerraum (4) gleichmäßig verteilt in einem Abstand (28) zueinander mehrere Lautsprecher (27) angeordnet sind und dass ein Digitalrechner (29) ausgebildet ist, wobei mittels des Digitalrechners (29) in Abhängigkeit der Schwenkwinkelstellung des Zuschauerbereiches die Audioausgabe auf die Lautsprecher (27) berechenbar ist.

## Claims

1. A multimedia experience facility (1) comprising:
- a first presentation unit (2)
- a second presentation unit (3)
- an auditorium (4) having a base area (5), wherein the first presentation unit (2) and the second presentation unit (3) are assigned to the auditorium (4)
- an audience area (6), wherein the audience area (6) is arranged inside the auditorium (4) and wherein the audience area (6) has a substructure (10) and a plurality of seats (8) accommodated thereon and wherein the arrangement of the seats (8) establishes a main viewing direction (9) in the audience area (6)
wherein
a bearing apparatus (11) is arranged in the auditorium (4), by means of which the substructure (10) of the audience area (6) can be pivoted relative to the base area (5) of the auditorium (4) in terms of its orientation
such that the main viewing direction (9) is oriented to the first presentation unit (2) in a first configuration
and the main viewing direction (9) is oriented to the second presentation unit (3) in a second configuration,
**characterized in that** the substructure (10) of the audience area (6) is freely rotatable relative to the base area (5) of the auditorium (4) by an unlimited number of revolutions, wherein a sliding contact (23), which provides electrical transmission, is formed between the substructure (10) of the audience area (6) and the base area (5) of the auditorium (4).

2. The multimedia experience facility (1) according to Claim 1, **characterized in that** a plurality of seating groups (12) are formed, wherein the seating groups (12) each comprise a plurality of the seats (8), wherein the seats (8) combined into a seating group (12) are jointly accommodated on the substructure (10) so as to be displaceable and/or pivotable relative to the substructure (10).

3. The multimedia experience facility (1) according to Claim 1 or 2, **characterized in that** the seats (8) each have a media supply.

4. The multimedia experience facility (1) according to Claim 1, **characterized in that** the sliding contact (23) has first poles (31) for electrical power transmission and further poles (32) for electrical signal transmission.

5. The multimedia experience facility (1) according to Claim 1, **characterized in that** a water storage (17) is arranged in the substructure (10) of the audience area (6), effect nozzles being assigned to the seats (8) and coupled to the water storage (17).

6. The multimedia experience facility (1) according to Claim 1, **characterized in that** a compressor (18) is arranged in the substructure (10) of the audience area (6), effect nozzles being assigned to the seats (8) and coupled to the compressor (18).

7. The multimedia experience facility (1) according to Claim 1, **characterized in that** a third presentation unit (7) is formed, wherein the first presentation unit (2) and the third presentation unit (7) are arranged in a first circular segment (14) of the auditorium (4) with respect to the base area (5) of the auditorium (4), and the second presentation unit (3) is arranged in a second circular segment (15) of the auditorium (4), wherein the first circular segment (14) spans a first circular segment angle (16) between 140° and 180°.

8. The multimedia experience facility (1) according to Claim 1, **characterized in that** the second presentation unit (3) comprises a display surface (25), which is configured in a dome shape, the display surface (25) having an opening angle (26) between 180° and 220° as viewed in cross section.

9. The multimedia experience facility (1) according to Claim 8, **characterized in that** the display surface (25) comprises a plurality of light-emitting diodes (33).

10. The multimedia experience facility (1) according to Claim 9, **characterized in that** the light-emitting diodes (33) are arranged on a support structure (34), wherein the support structure (34) is perforated and the light-emitting diodes (33) are arranged at a light-emitting-diode distance (35) from one another such that a plurality of continuous recesses (36) are formed from a surface of the display surface (25) to a rear side of the support structure (34).

11. The multimedia experience facility (1) according to Claim 8, **characterized in that** display surface (25) is configured as a projection surface and that a plurality of projectors (37) are arranged in the auditorium (4), at least one of the projectors (37) being arranged behind the display surface (25), wherein an opening (38) is formed in the display surface (25), through which the projector (37) projects onto an opposite region of the display surface (25).

12. The multimedia experience facility (1) according to Claim 8, **characterized in that** the display surface (25) is configured as a projection surface and that a plurality of projectors (37) are arranged in the auditorium (4), the image being partially blacked out by at least one of the projectors (37) at a certain angular position of the substructure (10) of the audience area (6).

13. The multimedia experience facility (1) according to Claim 1, **characterized in that** an emergency escape staircase (20, 21), which leads into the substructure (10) of the audience area (6), is formed at the front of the audience area (6) in the main viewing direction (9), wherein a circumferential emergency escape route (19) is formed in the substructure (10) of the audience area (6).

14. The multimedia experience facility (1) according to Claim 13, **characterized in that** at least one first emergency escape staircase (20) and one second emergency escape staircase (21) are formed, wherein a lowerable wheelchair transport platform (22) is formed in the region of the first emergency escape staircase (20).

15. The multimedia experience facility (1) according to Claim 13 or 14, **characterized in that** a technical room (24), which is enclosed by the circumferential emergency escape route (19), is arranged in the substructure (10) of the audience area (6).

16. The multimedia experience facility (1) according to Claim 1, **characterized in that** a railing (30) is arranged between individual seat rows (13) or at the edge of the audience area (6), the railing (30) being transparent or translucent.

17. The multimedia experience facility (1) according to Claim 16, **characterized in that** the railing (30) serves as an additional display surface.

18. The multimedia experience facility (1) according to Claim 1, **characterized in that** a plurality of loudspeakers (27) are arranged at an evenly distributed distance (28) from one another in the auditorium (4), and that a digital computer (29) is configured, wherein the audio output to the loudspeakers (27) can be calculated using the digital computer (29) depending on the pivot angle position of the audience area.

## Revendications

1. Installation multimédia (1) comprenant :
- une première unité de projection (2) ;
- une deuxième unité de projection (3) ;
- une salle de spectacle (4) avec une surface de base (5), la première unité de projection (2) et la deuxième unité de projection (3) étant associées à la salle de spectacle (4) ;
- une zone réservée aux spectateurs (6), la zone réservée aux spectateurs (6) étant agencée à l'intérieur de la salle de spectacle (4) et la zone réservée aux spectateurs (6) présentant une sous-structure (10) sur laquelle sont agencés plusieurs sièges (8), l'agencement des sièges (8) définissant une direction principale du regard (9) dans la zone réservée aux spectateurs (6),
un dispositif de stockage (11) étant agencé dans la salle de spectacle (4), au moyen duquel la sous-structure (10) de la zone réservée aux spectateurs (6) peut pivoter dans son orientation par rapport à la surface de base (5) de la salle de spectacle (4) de sorte que, dans une première configuration, la direction principale du regard (9) est orientée vers la première unité de projection (2) et,
dans une deuxième configuration, la direction principale du regard (9) est orientée vers la deuxième unité de projection (3),
**caractérisé en ce que** la sous-structure (10) de la zone réservée aux spectateurs (6) peut tourner librement d'un nombre illimité de tours par rapport à la surface de base (5) de la salle de spectacle (4), un contact glissant (23) étant conçu entre la sous-structure (10) de la zone réservée aux spectateurs (6) et la surface de base (5) de la salle de spectacle (4) qui sert à la transmission électrique.

2. Installation multimédia (1) selon la revendication 1, **caractérisée en ce que** plusieurs groupes de sièges (12) sont conçus, les groupes de sièges (12) comprenant chacun plusieurs sièges (8), les sièges (8) regroupés dans un groupe de sièges (12) pouvant être déplacés et/ou pivotés conjointement par rapport à la sous-structure (10) et étant logés sur la sous-structure (10).

3. Installation multimédia (1) selon la revendication 1 ou 2, **caractérisée en ce que** les sièges (8) présentent chacun une alimentation multimédia.

4. Installation multimédia (1) selon la revendication 1, **caractérisée en ce que** le contact glissant (23) comporte une première série de pôles (31) pour la transmission de puissance électrique et d'autres pôles (32) pour la transmission de signaux électriques.

5. Installation multimédia (1) selon la revendication 1, **caractérisée en ce qu'**un réservoir d'eau (17) est agencé dans la sous-structure (10) de la zone réservée aux spectateurs (6), des buses à effets associées aux sièges (8) étant couplées au réservoir d'eau (17).

6. Installation multimédia (1) selon la revendication 1, **caractérisée en ce qu'**un compresseur (18) est agencé dans la sous-structure (10) de la zone réservée aux spectateurs (6), des buses à effets associées aux sièges (8) étant couplées au compresseur (18).

7. Installation multimédia (1) selon la revendication 1, **caractérisée en ce qu'**une troisième unité de projection (7) est conçue, la première unité de projection (2) et la troisième unité de projection (7) étant agencées, par rapport à la surface de base (5) de la salle de spectacle (4) dans un premier segment circulaire (14) de la salle de spectacle (4) et la deuxième unité de projection (3) est agencée dans un deuxième segment circulaire (15) de la salle de spectacle (4), le premier segment circulaire (14) formant un premier angle de segment circulaire (16) compris entre 140° et 180°.

8. Installation multimédia (1) selon la revendication 1, **caractérisée en ce que** la deuxième unité de projection (3) comprend une surface d'affichage (25) qui est conçue en forme de dôme, la surface d'affichage (25) présentant, vue en coupe transversale, un angle d'ouverture (26) compris entre 180° et 220°.

9. Installation multimédia (1) selon la revendication 8, **caractérisée en ce que** la surface d'affichage (25) comprend une pluralité de diodes électroluminescentes (33).

10. Installation multimédia (1) selon la revendication 9, **caractérisée en ce que** les diodes électroluminescentes (33) sont agencées sur une structure porteuse (34), la structure porteuse (34) étant perforée et les diodes électroluminescentes (33) étant agencées à une distance (35) les unes des autres de sorte que plusieurs évidements continus (36) sont conçus entre une surface de la surface d'affichage (25) et une face arrière de la structure porteuse (34).

11. Installation multimédia (1) selon la revendication 8, **caractérisée en ce que** la surface d'affichage (25) est conçue comme une surface de projection et **en ce que** plusieurs projecteurs (37) sont agencés dans la salle de spectacle (4),
au moins un des projecteurs (37) étant agencé derrière la surface d'affichage (25), une ouverture (38) étant conçue dans la surface d'affichage (25), à travers laquelle le projecteur (37) projette sur une zone opposée de la surface d'affichage (25).

12. Installation multimédia (1) selon la revendication 8, **caractérisée en ce que** la surface d'affichage (25) est conçue comme une surface de projection et **en ce que** plusieurs projecteurs (37) sont agencés dans la salle de spectacle (4),
l'image d'au moins l'un des projecteurs (37) étant partiellement noircie lorsque la sous-structure (10) de la zone réservée aux spectateurs (6) se trouve dans une certaine position angulaire.

13. Installation multimédia (1) selon la revendication 1, **caractérisée en ce qu'**un escalier de secours (20, 21) est aménagé à l'avant de la zone réservée aux spectateurs (6) dans la direction principale du regard (9), lequel escalier d'évacuation mène à la sous-structure (10) de la zone réservée aux spectateurs (6), une issue de secours périphérique (19) étant aménagée dans la sous-structure (10) de la zone réservée aux spectateurs (6).

14. Installation multimédia (1) selon la revendication 13, **caractérisée en ce qu'**au moins un premier escalier de secours (20) et un deuxième escalier de secours (21) sont conçus, une plateforme de transport de fauteuils roulants abaissable (22) étant conçue dans la zone du premier escalier de secours (20).

15. Installation multimédia (1) selon la revendication 13 ou 14, **caractérisée en ce qu'**un local technique (24) est agencé dans la sous-structure (10) de la zone réservée aux spectateurs (6), entouré par l'issue de secours périphérique (19).

16. Installation multimédia (1) selon la revendication 1, **caractérisée en ce qu'**une balustrade (30) est agencée entre les rangées de sièges individuelles (13) ou au bord de la zone réservée aux spectateurs (6), la balustrade (30) étant transparente ou translucide.

17. Installation multimédia (1) selon la revendication 16, **caractérisée en ce que** la balustrade (30) sert de surface d'affichage supplémentaire.

18. Installation multimédia (1) selon la revendication 1, **caractérisée en ce que** plusieurs haut-parleurs (27) sont agencés de manière uniforme dans la salle de spectacle (4) à une distance (28) les uns des autres et **en ce qu'**un ordinateur numérique (29) est prévu, l'ordinateur numérique (29) permettant de calculer la sortie audio vers les haut-parleurs (27) en fonction de la position angulaire de pivotement de la zone réservée aux spectateurs.
